# EUROPÄISCHE PATENTSCHRIFT

(11) **EP 3 215 389 B1**
(45) Veröffentlichungstag und Bekanntmachung des Hinweises auf die Patenterteilung: **17.04.2019**
(21) Anmeldenummer: 15793754.1
(22) Anmeldetag: 05.11.2015
(51) Int. Cl.: B60K 23/08

(54) **VERFAHREN ZUM BETREIBEN EINES MEHRACHSANTRIEBSSTRANGS FÜR EIN KRAFTFAHRZEUG SOWIE ENTSPRECHENDER MEHRFACHSANTRIEBSSTRANG**
METHOD FOR OPERATING A MULTI-AXLE DRIVE TRAIN FOR A MOTOR VEHICLE AND CORRESPONDING MULTI-AXLE DRIVE TRAIN
PROCÉDÉ DE COMMANDE D'UNE TRANSMISSION MULTIPLE D'UN VÉHICULE À MOTEUR ET TRANSMISSION MULTIPLE CORRESPONDANTE

(30) Priorität: 06.11.2014 DE 102014016450
(43) Veröffentlichungstag der Anmeldung: 13.09.2017
(73) Patentinhaber: AUDI AG, 85045 Ingolstadt (DE)
(72) Erfinder: WEIDEMANN, Dieter, 85134 Stammham (DE); HANICKEL, Heiko, 85110 Kipfenberg (DE); KOLB, Florian, 85049 Ingolstadt (DE); BRÜHL, Hans Jörg, 85092 Kösching (DE)
(74) Vertreter: Lehle, Josef
(86) Internationale Anmeldenummer: PCT/EP2015/075791
(87) Internationale Veröffentlichungsnummer: WO 2016/071437

(56) Entgegenhaltungen:
- DE-A1- 4 036 280
- DE-A1-102009 031 500
- DE-A1-102012 011 181

## Beschreibung

Die Erfindung betrifft ein Verfahren zum Betreiben eines Mehrachsantriebsstrangs für ein Kraftfahrzeug, wobei der Mehrachsantriebsstrang eine Antriebseinrichtung zur Bereitstellung eines Drehmoments aufweist und eine erste Achse permanent und eine zweite Achse über eine Kupplung zumindest zeitweilig mit der Antriebseinrichtung wirkverbunden sind, wobei bei mit der Antriebseinrichtung gekoppelter zweiter Achse ein Maximaldrehmoment der Antriebseinrichtung um einen bestimmten Sicherheitswert reduziert wird, und wobei das von der Antriebseinrichtung bereitgestellte Drehmoment in Richtung größerer Werte auf das Maximaldrehmoment begrenzt wird. Die Erfindung betrifft weiterhin einen Mehrachsantriebsstrang.

Der Mehrachsantriebsstrang kann beispielsweise für ein Kraftfahrzeug verwendet werden und insbesondere Bestandteil des Kraftfahrzeugs sein. Der Mehrachsantriebsstrang ermöglicht das Antreiben mehrerer Achsen, beispielsweise der ersten Achse, insbesondere einer Vorderachse, und der zweiten Achse, insbesondere einer Hinterachse, des Kraftfahrzeugs. Eine Wirkverbindung zwischen den Achsen des Kraftfahrzeugs kann dabei über eine Verbindungswelle, welche beispielsweise als Kardanwelle vorliegt, hergestellt werden. Häufig ist es wünschenswert, dass mittels des Mehrachsantriebsstrangs lediglich zeitweise ein Mehrachsbetrieb durchgeführt wird, während welchem tatsächlich mehrere der Achsen angetrieben werden. Im Falle des Kraftfahrzeugs ist dies beispielsweise nur dann notwendig, wenn die Traktion bei einem Antreiben nur einer der Achsen zu gering wäre und/oder das gewünschte Fahrverhalten nur mit Mehrachsantrieb realisierbar ist. Häufig ist es daher sinnvoll, mittels des Mehrachsantriebsstrangs lediglich eine der Achsen, nämlich die erste Achse, anzutreiben.

Aus diesem Grund ist die erste Achse permanent mit der Antriebseinrichtung wirkverbunden. Die Antriebseinrichtung verfügt dabei beispielsweise über wenigstens ein Antriebsaggregat, insbesondere eine Brennkraftmaschine. Weiterhin kann die Antriebseinrichtung wenigstens ein Schaltgetriebe und/oder eine Anfahrkupplung umfassen. Die zweite Achse ist über die Kupplung mit der Antriebseinrichtung wirkverbunden. Bei geöffneter Kupplung ist insoweit die Wirkverbindung zwischen der Antriebseinrichtung und der zweiten Achse unterbrochen. Bei wenigstens teilweise, insbesondere vollständig geschlossener Kupplung wird dagegen wenigstens ein Teil des von der Antriebseinrichtung bereitgestellten Drehmoments an die zweite Achse übertragen. Eine derartige Ausgestaltung des Mehrachsantriebsstrangs kann beispielsweise als "hang on"-Antriebsstrang bezeichnet werden.

Ist die Kupplung geschlossen, werden mittels der Antriebseinrichtung also sowohl die erste Achse als auch die zweite Achse angetrieben, so wird das von der Antriebseinrichtung bereitgestellte Drehmoment anhand des jeweils absetzbaren Kraftpotentials der Achsen auf diese verteilt. Kann die zuschaltbare zweite Achse nicht ausreichend Drehmoment übertragen, beispielsweise weil der Reibungskoeffizient zwischen Rädern der zweiten Achse und einem Untergrund des Kraftfahrzeugs zu gering ist, insbesondere weil die Räder auf Eis stehen, wird das nicht über die zweite Achse übertragbare Drehmoment der Antriebseinrichtung an die starr gekoppelte erste Achse abgegeben.

Das bedeutet in erster Konsequenz, dass die erste Achse beziehungsweise die Wirkverbindung zwischen der Antriebseinrichtung und der ersten Achse derart ausgelegt sein muss, dass das gesamte von der Antriebseinrichtung bereitstellbare Drehmoment an der ersten Achse anliegen darf, ohne dass Beschädigungen zu erwarten sind. Alternativ ist es vorgesehen, dass das Maximaldrehmoment der Antriebseinrichtung um den bestimmten Sicherheitswert reduziert wird, wenn die zweite Achse mit der Antriebseinrichtung gekoppelt ist.

Der bestimmte Sicherheitswert entspricht dabei der Differenz zwischen dem Maximaldrehmoment der Antriebseinrichtung und dem maximal an die erste Achse zu übertragenden Drehmoment, bei welchem keine Beschädigungen zu erwarten sind. Das Maximaldrehmoment abzüglich des bestimmten Sicherheitswerts entspricht also diesem Drehmoment, welches problemlos an die erste Achse abgegeben werden kann beziehungsweise über diese übertragbar ist. Unter dem Maximaldrehmoment ist dasjenige Drehmoment zu verstehen, das von der Antriebseinrichtung maximal erzeugt beziehungsweise maximal an die erste Achse und/oder die zweite Achse abgegeben werden darf. Das von der Antriebseinrichtung bereitgestellte Drehmoment wird insoweit nach oben, also in Richtung größerer Werte, auf das Maximaldrehmoment begrenzt. Das von der Antriebseinrichtung bereitgestellte beziehungsweise an die erste Achse und/oder die zweite Achse abgegebene Drehmoment soll also stets kleiner oder gleich dem Maximaldrehmoment sein.

Aus dem Stand der Technik ist beispielsweise die Druckschrift DE 10 2012 011 181 A1 bekannt. Diese betrifft ein Verfahren zum Betreiben einer Antriebseinrichtung eines mehrere Räder aufweisenden Kraftfahrzeugs, wobei für wenigstens einen Teil der Räder ein Solldrehmoment bestimmt und in einer Normalbetriebsart ein von einem Antriebsaggregat bereitgestelltes Antriebsdrehmoment entsprechend dem jeweiligen Solldrehmoment mittels einer Drehmomentverteilungseinrichtung auf die Räder des Kraftfahrzeugs verteilt wird. Dabei sind die folgenden Schritte vorgesehen: Ermitteln wenigstens einer Betriebs- und/oder Zustandsgröße des Kraftfahrzeugs und/oder seiner Umgebung; Beurteilen einer Längsmomentschwankungswahrscheinlichkeit anhand der wenigstens einen Betriebs- und/oder Zustandsgröße, wobei die Längsmomentschwankungswahrscheinlichkeit vorliegt, wenn die Betriebs- und/oder Zustandsgröße in einem bestimmten Wertebereich liegt, der von einem unteren Grenzwert und von einem oberen Grenzwert begrenzt wird; und Einleiten einer Komfortbetriebsart bei Vorliegen der Längsmomentschwankungswahrscheinlichkeit, wobei in der Komfortbetriebsart das Istdrehmoment an wenigstens einem der Räder in Richtung eines bestimmten Maximaldrehmoments reduziert wird, wobei das Maximaldrehmoment kleiner als das Solldrehmoment ist.

Es ist nun Aufgabe der Erfindung, ein Verfahren zum Betreiben eines Mehrachsantriebsstrangs für ein Kraftfahrzeug vorzuschlagen, welches gegenüber dem Stand der Technik Vorteile aufweist, insbesondere eine optimale Nutzung des von der Antriebseinrichtung erzeugbaren Drehmoments ermöglicht.

Dies wird erfindungsgemäß mit einem Verfahren mit den Merkmalen des Anspruchs 1 erreicht. Dabei ist vorgesehen, dass bei Fahrtbeginn der Sicherheitswert auf einen bestimmten Initialwert gesetzt und nachfolgend über einen bestimmten Zeitraum hinweg reduziert wird, wobei der Initialwert einer Differenz zwischen dem Maximaldrehmoment und dem maximal an die erste Achse zu übertragenden Drehmoment entspricht, bei welchem keine Beschädigungen zu erwarten sind. Unter dem Fahrtbeginn ist beispielsweise der Zeitpunkt zu verstehen, zu welchem die Antriebseinrichtung, beispielsweise eine Brennkraftmaschine, gestartet wird. Alternativ kann der Zeitpunkt auch denjenigen Zeitpunkt bezeichnen, in welchem das Kraftfahrzeug beginnt, sich in Bewegung zu setzen, oder in welchem die zweite Achse mit der Antriebseinrichtung gekoppelt wird. Insbesondere kann als Zeitpunkt derjenige Zeitpunkt verwendet werden, in welchem zuerst zwei Bedingungen erfüllt sind: Es liegt eine Fahrgeschwindigkeit von Null vor, das Kraftfahrzeug befindet sich also im Stillstand, und die zweite Achse ist mit der Antriebseinrichtung gekoppelt beziehungsweise wirkverbunden.

Die Reduzierung des Maximaldrehmoments der Antriebseinrichtung um den bestimmten Sicherheitswert ist insoweit problematisch, als dass bei mit der Antriebseinrichtung gekoppelter zweiter Achse nie das vollständige Potential der Antriebseinrichtung abgerufen werden kann, weil das Maximaldrehmoment, welches maximal an der Antriebseinrichtung abgerufen werden kann, reduziert wird. Andererseits ist die Reduzierung des Maximaldrehmoments nur dann notwendig, wenn der Anteil des an die zweite Achse übertragenen Drehmoments zu gering ist, beispielsweise weil der Reibungskoeffizient zu gering ist.

Kann dagegen über die zweite Achse ein ausreichend großes Drehmoment an den Untergrund übertragen werden, so ist die Reduzierung des Maximaldrehmoments nicht notwendig, weil sich dieses auf die erste Achse und die zweite Achse verteilt. Aus diesem Grund soll zwar zunächst bei Fahrtbeginn der Sicherheitswert auf den Initialwert gesetzt werden. Dieser ist dabei derart gewählt, dass das reduzierte Maximaldrehmoment demjenigen Drehmoment entspricht, welches sicher über die erste Achse beziehungsweise an die erste Achse übertragen werden kann, ohne dass Beschädigungen zu befürchten sind. Nachfolgend ist es jedoch vorgesehen, den bestimmten Sicherheitswert zu reduzieren, sodass sich entsprechend das um den bestimmten Sicherheitswert reduzierte Maximaldrehmoment in Richtung seines (nicht reduzierten) Ausgangswerts vergrößert. Das Reduzieren erfolgt dabei über den bestimmten Zeitraum hinweg.

Die beschriebene Vorgehensweise für das Reduzieren des Sicherheitswerts hat den Vorteil, dass zum einen auf bekannte Art und Weise ein sicherer Betrieb des Mehrachsantriebsstrangs sichergestellt wird und zum anderen das vollständige Potential der Antriebseinrichtung ausgenutzt werden kann, indem zumindest zeitweise das nicht reduzierte Maximaldrehmoment an der ersten Achse und der zweiten Achse anliegt und über diese vorzugsweise vollständig an den Untergrund übertragen wird, insoweit also zum Beschleunigen des Kraftfahrzeugs verwendet wird. In einer weiteren Ausgestaltung der Erfindung ist vorgesehen, dass ein Kraftübertragungspotential der Räder der zweiten Achse ermittelt wird. Es ist also vorgesehen, dass bei Fahrtbeginn und/oder nach Fahrtbeginn festgestellt wird, wie groß die zuverlässig über die Räder der zweiten Achse übertragbare Radkraft ist. Aus diesen Radkräften ergibt sich das Kraftübertragungspotential für die zweite Achse.

Eine Weiterbildung der Erfindung sieht vor, dass eine Differenzdrehzahl der Kupplung aus einer antriebseinrichtungsseitigen Drehzahl und einer radseitigen Drehzahl der Kupplung ermittelt wird. Wie bereits erläutert, ist über die Kupplung die zweite Achse mit der Antriebseinrichtung koppelbar. Die Kupplung weist dabei eine Eingangswelle sowie eine Ausgangswelle auf, wobei erstere vorzugsweise starr und/oder permanent mit der Antriebseinrichtung sowie letztere vorzugsweise starr und/oder permanent mit der zweiten Achse wirkverbunden ist. Die antriebseinrichtungsseitige Drehzahl entspricht nun der Drehzahl der Eingangswelle, während die radseitige Drehzahl der Drehzahl der Ausgangswelle entspricht. Aus den Drehzahlen der beiden Wellen kann die Differenzdrehzahl ermittelt werden. Ist die Differenzdrehzahl der Kupplung von Null verschieden, so liegt Kupplungsschlupf vor.

In einer weiteren Ausgestaltung der Erfindung ist vorgesehen, dass für einen die Antriebseinrichtung mit der ersten Achse wirkverbindenden ersten Antriebsteilstrang ein erster Torsionswert und für einen die Antriebseinrichtung mit der zweiten Achse wirkverbindenden zweiten Antriebsteilstrang ein zweiter Torsionswert ermittelt wird. Unter den Torsionswerten ist insbesondere das auf dem jeweiligen Antriebsteilstrang wirkende Drehmoment beziehungsweise die durch dieses bewirkte Verformung, insbesondere Verdrehung, zu verstehen, wobei insbesondere das Vorzeichen dieses Drehmoments beziehungsweise der Verformung betrachtet wird. Die Verformung tritt aufgrund des anliegenden Drehmoments auf, weil der erste Antriebsteilstrang sowie der zweite Antriebsteilstrang eine bestimmte Elastizität aufweisen.

Eine besonders bevorzugte Ausgestaltung der Erfindung sieht vor, dass aus einer Beschleunigung des Kraftfahrzeugs die von den Rädern übertragene Radkraft ermittelt wird. Die Beschleunigung des Kraftfahrzeugs kann auf unterschiedliche Art und Weise ermittelt werden, besonders bevorzugt unter Verwendung eines Beschleunigungssensors. Aus der Beschleunigung kann nun unmittelbar auf die Radkraft geschlossen werden, welche von den Rädern des Kraftfahrzeugs insgesamt auf den Untergrund übertragen wird.

Eine besonders vorteilhafte Ausgestaltung der Erfindung sieht vor, dass bei dem Ermitteln der Radkraft eine minimale Masse und/oder ein maximaler Radumfang verwendet werden. Um die Radkraft aus der Beschleunigung des Kraftfahrzeugs zu berechnen, sind sowohl die Masse als auch der Radumfang der Räder notwendig. Für die Masse wird bevorzugt die minimale Masse des Kraftfahrzeugs, beispielsweise also eine Leermasse des Kraftfahrzeugs, herangezogen. Diese kann fest hinterlegt sein. Der Radumfang entspricht beispielsweise dem maximalen Radumfang, welchen die Räder aufweisen können. Auch dieser maximale Radumfang kann beispielsweise fest hinterlegt sein. Alternativ können selbstverständlich die Masse und/oder der Radumfang auf andere Art und Weise ermittelt werden, beispielsweise abgeschätzt oder gemessen werden.

Eine weitere vorteilhafte Ausgestaltung der Erfindung sieht vor, dass eine von dem Kraftfahrzeug zurückgelegte Strecke bestimmt wird, insbesondere durch Integration der Beschleunigung. Vorstehend wurde bereits erläutert, dass die Beschleunigung des Kraftfahrzeugs ermittelt wird, um aus dieser auf die von den Rädern übertragene Radkraft zu schließen. Zusätzlich kann aus der Beschleunigung die von dem Kraftfahrzeug zurückgelegte Strecke ermittelt werden, indem sie über einen bestimmten Zeitraum integriert beziehungsweise zweifach integriert wird. Der bestimmte Zeitraum beginnt beispielsweise bei Fahrtbeginn und endet zum momentanen Zeitpunkt.

In einer Weiterbildung der Erfindung ist vorgesehen, dass der Sicherheitswert um einen bestimmten Betrag reduziert wird, wenn die zurückgelegte Strecke mindestens einem Radstand des Kraftfahrzeugs entspricht, und/oder die Differenzdrehzahl der Kupplung kleiner als ein Grenzwert ist, und/oder die Beschleunigung des Kraftfahrzeugs einer erwarteten Längsbeschleunigung entspricht, und/oder ein zeitlicher Verlauf des ersten Torsionswerts und/oder ein zeitlicher Verlauf des zweiten Torsionswerts keinen Lastwechsel aufweisen. Wenigstens eine der genannten Bedingungen muss erfüllt sein, damit der Sicherheitswert reduziert wird. Besonders bevorzugt sind mehrere der genannten Bedingungen, insbesondere alle der genannten Bedingungen, zu erfüllen.

Der Radstand des Kraftfahrzeugs ist besonders bevorzugt gleich dem Abstand zwischen der ersten Achse und der zweiten Achse. Sobald die zurückgelegte Strecke zumindest dem Radstand entspricht oder größer ist als dieser, kann darauf geschlossen werden, dass das Kraftfahrzeug eine ausreichend große Strecke zurückgelegt hat, damit die weiteren Bedingungen zuverlässig ausgewertet werden können.

Zusätzlich oder alternativ wird überprüft, ob die Differenzdrehzahl kleiner als ein Grenzwert ist. Ist dies der Fall, liegt also kein oder lediglich geringer Schlupf der Kupplung vor, so kann darauf geschlossen werden, dass ein ausreichend großes Drehmoment über die zweite Achse abgesetzt werden kann. Entsprechend kann es bei erfüllter Bedingung möglich sein, den bestimmten Sicherheitswert zu reduzieren, sodass das Maximaldrehmoment vergrößert wird. Dies ist insbesondere der Fall, wenn die Kupplung in Abhängigkeit von dem tatsächlich über die zweite Achse abgesetzten Drehmoment eingestellt, insbesondere geregelt wird. Beispielsweise wird die Kupplung derart eingestellt, dass das über die zweite Achse abgesetzte Drehmoment maximal ist.

Zudem kann es zusätzlich oder alternativ vorgesehen sein, die Beschleunigung des Kraftfahrzeugs, insbesondere die Längsbeschleunigung, mit der erwarteten Beschleunigung, insbesondere der erwarteten Längsbeschleunigung, zu vergleichen. Entspricht die tatsächliche Beschleunigung der erwarteten Beschleunigung, so kann darauf geschlossen werden, dass das von der Antriebseinrichtung bereitgestellte Drehmoment über die Räder des Kraftfahrzeugs abgesetzt wird, insbesondere ohne Schlupf beziehungsweise mit Schlupf in einem zulässigen Bereich. Die erwartete Beschleunigung wird beispielsweise aus dem momentan von der Antriebseinrichtung erzeugten Drehmoment, welches auch als Antriebsmoment bezeichnet werden kann, bestimmt.

Weiterhin kann es vorgesehen sein, den zeitlichen Verlauf des ersten Torsionswerts und/oder des zweiten Torsionswerts zu betrachten. Ist diesen kein Lastwechsel während des betrachteten Zeitraums zu entnehmen, so ist auch dies ein Hinweis darauf, dass über die zweite Achse zuverlässig ein ausreichend großes Drehmoment abgesetzt werden kann. Auch in diesem Fall ist es insoweit möglich, den bestimmten Sicherheitswert zu reduzieren.

Weiterhin kann in einer vorteilhaften Ausgestaltung der Erfindung vorgesehen sein, dass der Sicherheitswert bei Auftreten einer Sicherheitsanforderung vergrößert wird. Bei Auftreten der Sicherheitsanforderung kann also das Reduzieren abgebrochen oder zumindest unterbrochen werden. Nach dem bestimmten Zeitraum, in welchem der Sicherheitswert reduziert wurde, kann also der Sicherheitswert wieder vergrößert werden, insbesondere bei Auftreten der Sicherheitsanforderung. Entfällt die Sicherheitsanforderung nachfolgend wieder, so kann das Reduzieren fortgesetzt werden.

Die Sicherheitsanforderung tritt beispielsweise auf, wenn die Differenzdrehzahl der Kupplung einen bestimmten Grenzwert überschreitet, also Schlupf beziehungsweise zu starker Schlupf an der Kupplung auftritt. Zusätzlich oder alternativ tritt sie auf, wenn die Beschleunigung des Kraftfahrzeugs, insbesondere die Längsbeschleunigung, kleiner als die erwartete Beschleunigung ist. Es kann zudem vorgesehen sein, dass die Sicherheitsanforderung auftritt, wenn der erste Torsionswert und/oder der zweite Torsionswert auf eine Entspannung des ersten Antriebsteilstrangs beziehungsweise des zweiten Antriebsteilstrangs hinweisen, obwohl das von der Antriebseinrichtung an den ersten Antriebsteilstrang und/oder den zweiten Antriebsteilstrang übertragene Drehmoment konstant bleibt oder ansteigt.

Ebenso kann die Sicherheitsanforderung auftreten, wenn der erste Torsionswert und/oder der zweite Torsionswert auf eine ungleichmäßige Torsion der Antriebsteilstränge hinweisen, insbesondere also wenn die Torsionswerte ungleich sind oder die Differenz zwischen ihnen einen bestimmten Torsionsgrenzwert überschreitet. Auch wenn der erste Torsionswert und/oder der zweite Torsionswert einen Erwartungswert unterschreiten, kann die Sicherheitsanforderung auftreten. Der Erwartungswert wird zum Beispiel aus dem von der Antriebseinrichtung erzeugten beziehungsweise übertragenen Drehmoment ermittelt. Vorzugsweise wird der erste Torsionswert mit einem ersten Erwartungswert und der zweite Torsionswert mit einem zweiten Erwartungswert verglichen. Die Erwartungswerte können gleich oder voneinander verschieden sein. Bevorzugt werden sie - wie erläutert - aus dem von der Antriebseinrichtung erzeugten Drehmoment ermittelt.

Die Sicherheitsanforderung tritt beispielsweise auf, wenn wenigstens eine der genannten Bedingungen erfüllt ist. Alternativ kann sie auch erst bei Erfüllung mehrerer der Bedingungen auftreten.

Schließlich kann in einer vorteilhaften Ausgestaltung der Erfindung vorgesehen sein, dass der Sicherheitswert schrittweise oder stetig reduziert wird. Ist wenigstens ein, vorzugsweise mehrere oder alle der vorstehend genannten Bedingungen erfüllt, so kann der bestimmte Sicherheitswert reduziert werden. Dies wird entweder schrittweise oder stetig vorgenommen. Bei schrittweiser Reduzierung des bestimmten Sicherheitswerts wird in Zeitintervallen der Sicherheitswert jeweils reduziert, während er zwischenzeitlich konstant bleibt. Unter einem stetigen Reduzieren ist dagegen ein im Wesentlichen kontinuierliches Reduzieren mit einem bestimmten zeitlichen Gradient zu verstehen. Das vorstehend erwähnte Vergrößern des Sicherheitswerts kann analog zu dem Reduzieren schrittweise oder stetig vorgenommen werden. Die entsprechenden Ausführungen können insoweit herangezogen werden.

Die Erfindung betrifft weiterhin einen Mehrachsantriebsstrang für ein Kraftfahrzeugs, zur Durchführung des vorstehend erläuterten Verfahrens, wobei der Mehrachsantriebsstrang eine Antriebseinrichtung zur Bereitstellung eines Drehmoments aufweist und eine erste Achse permanent und eine zweite Achse über eine Kupplung zumindest zeitweilig mit der Antriebseinrichtung wirkverbunden sind, wobei bei mit der Antriebseinrichtung gekoppelter zweiter Achse ein Maximaldrehmoment der Antriebseinrichtung um einen bestimmten Sicherheitswert reduziert wird, und wobei das von der Antriebseinrichtung bereitgestellte Drehmoment in Richtung größerer Werte auf das Maximaldrehmoment begrenzt wird. Dabei ist vorgesehen, dass der Mehrachsantriebsstrang dazu ausgebildet ist, bei Fahrtbeginn den Sicherheitswert auf einen bestimmten Initialwert zu setzen und nachfolgend über einen bestimmten Zeitraum hinweg zu reduzieren, wobei der Initialwert einer Differenz zwischen dem Maximaldrehmoment und dem maximal an die erste Achse zu übertragenden Drehmoment entspricht, bei welchem keine Beschädigungen zu erwarten sind.

Auf die Vorteile einer derartigen Vorgehensweise beziehungsweise einer derartigen Ausgestaltung des Mehrachsantriebsstrangs wurde bereits eingegangen. Sowohl der Mehrachsantriebsstrang als auch das Verfahren können gemäß den vorstehenden Ausführungen weitergebildet sein, sodass insoweit auf diese verwiesen wird.

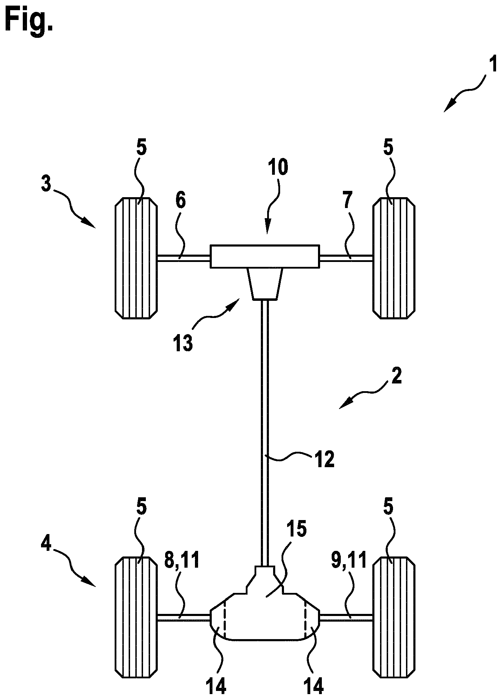

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Mehrachsantriebsstrangs für ein Kraftfahrzeug.

Die Figur zeigt einen Mehrachsantriebsstrang 1 für ein nicht weiter dargestelltes Kraftfahrzeug. Der Mehrachsantriebsstrang 1 verfügt über eine Mehrachsantriebseinrichtung 2, welche zum wahlweisen Betreiben nur einer ersten Achse 3 oder der ersten Achse 3 sowie einer zweiten Achse 4 dient. Jede der Achsen 3 und 4 verfügt in dem hier dargestellten Ausführungsbeispiel über zwei Räder 5, die an Teilachsen 6 und 7 der ersten Achse 3 und Teilachsen 8 und 9 der zweiten Achse 4 angeordnet sind. Es kann nun vorgesehen sein, dass die Teilachsen 6 und 7 der ersten Achse 3 eine erste Abtriebswelle 10 bilden. Besonders bevorzugt sind sie jedoch über ein Differentialgetriebe, insbesondere ein Achsdifferentialgetriebe an die erste Abtriebswelle 10 angeschlossen, also insbesondere starr und/oder permanent mit ihr wirkverbunden. Die Teilachsen 8 und 9 können jeweils als eine zweite Abtriebswelle 11 vorliegen. Alternativ kann es vorgesehen sein, dass die Teilachsen 8 und 9 über ein Differentialgetriebe, insbesondere ein Achsdifferentialgetriebe, an die zweite Abtriebswelle 11 angeschlossen sind.

Die Mehrachsantriebseinrichtung 2 verfügt über eine Verbindungswelle 12, über welche eine Wirkverbindung zwischen der ersten Achse 3 und der zweiten Achse 4 hergestellt werden kann. Die Verbindungswelle 12 ist vorzugsweise als Kardanwelle ausgeführt. In einer Wirkverbindung zwischen der ersten Abtriebswelle 10 und der Verbindungswelle 12 ist eine Synchronisierungskupplung 13 angeordnet. Die Synchronisierungskupplung . 13 ist vorzugsweise als kraftschlüssige Kupplung ausgestaltet. Sie ermöglicht insbesondere das Übertragen eines beliebigen Anteils des anliegenden Drehmoments. In einer Wirkverbindung zwischen der Verbindungswelle 12 und der zweiten Abtriebswelle 11 ist zudem eine Trennkupplung 14 angeordnet. In dem hier dargestellten Ausführungsbeispiel liegen insoweit zwei Trennkupplungen 14 vor, wobei jeweils eine der Trennkupplungen 14 zwischen einem Differentialgetriebe 15 und einer der beiden zweiten Abtriebswellen 11 beziehungsweise den Teilachsen 8 und 9 angeordnet ist.

Die Verbindungswelle 12 ist dabei starr und/oder permanent mit dem Differentialgetriebe 15 wirkverbunden. Die Wirkverbindung zwischen dem Differentialgetriebe 15 und mithin der Verbindungswelle 12 einerseits sowie den zweiten Abtriebswellen 11 in Form der Teilachsen 8 und 9 andererseits kann mit Hilfe der Trennkupplung 14 wahlweise hergestellt oder unterbrochen sein. Vorzugsweise befinden sich die Trennkupplungen 14 stets in der gleichen Stellung, sodass entweder eine Wirkverbindung zwischen der Verbindungswelle 12 einerseits und den Teilachsen 8 und 9 andererseits hergestellt oder unterbrochen ist.

In einem ersten Betriebszustand der Mehrachsantriebsvorrichtung 2 sind die Synchronisierungskupplung 13 und die Trennkupplung 14 geöffnet, sodass die Wirkverbindung zwischen der ersten Abtriebswelle 10 und der zweiten Abtriebswelle 11 unterbrochen ist. Insoweit nachfolgend lediglich von einer Trennkupplung 14 oder einer zweiten Abtriebswelle 11 die Rede ist, so sind im Rahmen des vorliegenden Ausführungsbeispiels stets beide Abtriebswellen 11 beziehungsweise beide Trennkupplungen 14 gemeint. In einem zweiten Betriebszustand sind die Synchronisierungskupplung 13 und die Trennkupplung 14 vollständig geschlossen. Die Trennkupplung 14 ist bevorzugt als Formschlusskupplung, insbesondere als Klauenkupplung, ausgeführt.

Im Rahmen des hier vorgestellten Mehrachsantriebsstrangs 1 ist die erste Achse 3 mit einer hier nicht dargestellten Antriebseinrichtung wirkverbunden beziehungsweise wird von dieser angetrieben. Die zweite Achse wird dagegen lediglich zeitweilig über eine Schaltkupplung mit der Antriebseinrichtung wirkverbunden und insoweit von dieser angetrieben. Die Schaltkupplung kann von der Synchronisierungskupplung 13 und/oder den Trennkupplungen 14 dargestellt sein. Von Bedeutung ist dabei lediglich, dass mithilfe der Schaltkupplung die Wirkverbindung zwischen der Antriebseinrichtung und der zweiten Antriebswelle 11 unterbrechbar ist.

Der Mehrachsantriebsstrang 1 wird nun derart betrieben, dass bei mit der Antriebseinrichtung gekoppelter zweiter Achse 4 ein Maximaldrehmoment der Antriebseinrichtung um einen bestimmten Sicherheitswert reduziert wird. Dieser Sicherheitswert soll bei Fahrtbeginn auf einen bestimmten Initialwert gesetzt und nachfolgend über einen bestimmten Zeitraum hinweg reduziert werden. Selbstverständlich kann es auch vorgesehen sein, den Sicherheitswert bei Auftreten bestimmter Bedingungen wieder zu vergrößern, also in Richtung des Initialwerts zu verändern. Auf diese Art und Weise wird das zur Verfügung stehende Maximaldrehmoment verringert.

## Patentansprüche

1. Verfahren zum Betreiben eines Mehrachsantriebsstrangs (1) für ein Kraftfahrzeug, wobei der Mehrachsantriebsstrang (1) eine Antriebseinrichtung zur Bereitstellung eines Drehmoments aufweist und eine erste Achse (3) permanent und eine zweite Achse (4) über eine Kupplung (13,14) zumindest zeitweilig mit der Antriebseinrichtung wirkverbunden sind, wobei bei mit der Antriebseinrichtung gekoppelter zweiter Achse (4) ein Maximaldrehmoment der Antriebseinrichtung um einen bestimmten Sicherheitswert reduziert wird, wobei das Maximaldrehmoment das mittels der Antriebseinrichtung maximal erzeugbare Drehmoment bezeichnet, und wobei das von der Antriebseinrichtung bereitgestellte Drehmoment in Richtung größerer Werte auf das Maximaldrehmoment begrenzt wird, **dadurch gekennzeichnet, dass** bei Fahrtbeginn der Sicherheitswert auf einen bestimmten Initialwert gesetzt und nachfolgend über einen bestimmten Zeitraum hinweg reduziert wird, wobei der Initialwert einer Differenz zwischen dem Maximaldrehmoment und dem maximal an die erste Achse zu übertragenden Drehmoment entspricht, bei welchem keine Beschädigungen zu erwarten sind.

2. Verfahren nach Anspruch 1, **dadurch gekennzeichnet, dass** ein Kraftübertragungspotential der Räder (5) der zweiten Achse (4) ermittelt wird.

3. Verfahren nach einem der vorhergehenden Ansprüche, **dadurch gekennzeichnet, dass** eine Differenzdrehzahl der Kupplung (13,14) aus einer antriebseinrichtungsseitigen Drehzahl und einer radseitigen Drehzahl der Kupplung (13,14) ermittelt wird.

4. Verfahren nach einem der vorhergehenden Ansprüche, **dadurch gekennzeichnet, dass** für einen die Antriebseinrichtung mit der ersten Achse wirkverbindenden ersten Antriebsteilstrang ein erster Torsionswert und für einen die Antriebseinrichtung mit der zweiten Achse wirkverbindenden zweiten Antriebsteilstrang ein zweiter Torsionswert ermittelt wird.

5. Verfahren nach einem der vorhergehenden Ansprüche, **dadurch gekennzeichnet, dass** aus einer Beschleunigung des Kraftfahrzeugs die von den Rädern (5) übertragene Radkraft ermittelt wird.

6. Verfahren nach einem der vorhergehenden Ansprüche, **dadurch gekennzeichnet, dass** bei dem Ermitteln der Radkraft eine minimale Masse und/oder ein maximaler Radumfang verwendet werden.

7. Verfahren nach einem der vorhergehenden Ansprüche, **dadurch gekennzeichnet, dass** eine von dem Kraftfahrzeug zurückgelegte Strecke bestimmt wird, insbesondere durch Integration der Beschleunigung.

8. Verfahren nach einem der vorhergehenden Ansprüche, **dadurch gekennzeichnet, dass** der Sicherheitswert um einen bestimmten Betrag reduziert wird, wenn
- die zurückgelegte Streckte mindestens einem Radstand des Kraftfahrzeugs entspricht, und/oder
- die Differenzdrehzahl der Kupplung kleiner als ein Grenzwert ist, und/oder
- die Beschleunigung des Kraftfahrzeugs einer erwarteten Beschleunigung entspricht, und/oder
- ein zeitlicher Verlauf des ersten Torsionswerts und/oder ein zeitlicher Verlauf des zweiten Torsionswerts keinen Lastwechsel aufweisen.

9. Verfahren nach einem der vorhergehenden Ansprüche, **dadurch gekennzeichnet, dass** der Sicherheitswert bei Auftreten einer Sicherheitsanforderung wieder vergrößert wird.

10. Mehrachsantriebsstrang (1) für ein Kraftfahrzeug zur Durchführung des Verfahrens nach einem der vorhergehenden Ansprüche, wobei der Mehrachsantriebsstrang (1) eine Antriebseinrichtung zur Bereitstellung eines Drehmoments aufweist und eine erste Achse (3) permanent und eine zweite Achse (4) über eine Kupplung (13,14) zumindest zeitweilig mit der Antriebseinrichtung wirkverbunden sind, wobei bei mit der Antriebseinrichtung gekoppelter zweiter Achse (4) ein Maximaldrehmoment der Antriebseinrichtung um einen bestimmten Sicherheitswert reduziert wird, wobei das Maximaldrehmoment das mittels der Antriebseinrichtung maximal erzeugbare Drehmoment bezeichnet, und wobei das von der Antriebseinrichtung bereitgestellte Drehmoment in Richtung größerer Werte auf das Maximaldrehmoment begrenzt wird, **dadurch gekennzeichnet, dass** der Mehrachsantriebsstrang (1) dazu ausgebildet ist, bei Fahrtbeginn den Sicherheitswert auf einen bestimmten Initialwert zu setzen und nachfolgend über einen bestimmten Zeitraum hinweg zu reduzieren, wobei der Initialwert einer Differenz zwischen dem Maximaldrehmoment und dem maximal an die erste Achse zu übertragenden Drehmoment entspricht, bei welchem keine Beschädigungen zu erwarten sind.

## Claims

1. Method for operating a multi-axle drive train (1) for a motor vehicle, wherein the multi-axle drive train (1) comprises a drive device to provide a torque and a first axle (3) is operatively connected to the driving device permanently and a second axle (4) is operatively connected to the driving device at least at times by means of a coupling (13, 14), wherein a maximum torque of the driving device is reduced by a certain safety value if the second axle (4) is coupled to the driving device, wherein the maximum torque denotes the maximum torque that can be generated by means of the drive device, and wherein the torque provided by the drive device is limited, in the direction of higher values, to the maximum torque, **characterised in that** the safety value is set to a certain initial value at the start of travel and is then reduced over a certain time period, wherein the initial value corresponds to a difference between the maximum torque and the maximum torque transmissible to the first axle, at which no damage is to be expected.

2. Method according to claim 1, **characterised in that** a power transmission potential of the wheels (5) of the second axle (4) is determined.

3. Method according to any one of the preceding claims, **characterised in that** a differential rotational speed of the coupling (13,14) is determined from a rotational speed on a drive device side and a rotational speed of the coupling (13, 14) on a wheel side.

4. Method according to any one of the preceding claims, **characterised in that** a first torsional value is determined for a first drive train part that operatively connects the drive device to the first axle and a second torsional value is determined for a second drive train part that operatively connects the drive device to the second axle.

5. Method according to any one of the preceding claims, **characterised in that** the wheel force transmitted by the wheels (5) is determined from an acceleration of the motor vehicle.

6. Method according to any one of the preceding claims, **characterised in that** a minimum mass and/or a maximum wheel circumference is used in the determination of the wheel force.

7. Method according to any one of the preceding claims, **characterised in that** a distance traversed by the motor vehicle is determined, more particularly through integration of the acceleration.

8. Method according to any one of the preceding claims, **characterised in that** the safety value is reduced by a specific amount when
- the distance traversed corresponds at least to a wheelbase of the motor vehicle, and/or
- the differential rotational speed of the coupling is less than a threshold value, and/or
- the acceleration of the motor vehicle corresponds to an expected acceleration, and/or
- a time course of the first torsional value and/or a time course of the second torsional value exhibit no load change.

9. Method according to any one of the preceding claims, **characterised in that** the safety value is increased again when a safety requirement arises.

10. Multi-axle drive train (1) for a motor vehicle to carry out the method according to any one of the preceding claims, wherein the multi-axle drive train (1) comprises a drive device to provide a torque and a first axle (3) is operatively connected to the driving device permanently and a second axle (4) is operatively connected to the driving device at least at times by means of a coupling (13, 14), wherein a maximum torque of the driving device is reduced by a certain safety value if the second axle (4) is coupled to the driving device, wherein the maximum torque denotes the maximum torque that can be generated by means of the drive device, and wherein the torque provided by the drive device is limited, in the direction of higher values, to the maximum torque, **characterised in that** the multi-axle drive train (1) is configured to set the safety value to a certain initial value at the start of travel and then to reduce it over a certain time period, wherein the initial value corresponds to a difference between the maximum torque and the maximum torque transmissible to the first axle, at which no damage is to be expected.

## Revendications

1. Procédé de commande d'une transmission multiple (1) pour un véhicule à moteur, dans lequel la transmission multiple (1) présente un dispositif de propulsion pour la mise à disposition d'un couple et un premier essieu (3) est en liaison active permanente avec le dispositif de propulsion et un deuxième essieu (4) est en liaison active au moins temporaire avec le dispositif de propulsion par le biais d'un embrayage (13, 14), dans lequel lorsque le deuxième essieu (4) est couplé au dispositif de propulsion, un couple maximum du dispositif de propulsion est réduit d'une valeur de sécurité déterminée, dans lequel le couple maximum désigne le couple pouvant être généré au maximum au moyen du dispositif de propulsion, et dans lequel le couple mis à disposition par le dispositif de propulsion est limité en direction de valeurs plus grandes au couple maximum, **caractérisé en ce qu'**au début du déplacement, la valeur de sécurité est réglée sur une valeur initiale déterminée et ensuite réduite sur une période de temps déterminée, dans lequel la valeur initiale correspond à une différence entre le couple maximum et le couple maximum à transmettre au premier essieu, pour lequel aucun endommagement n'est prévu.

2. Procédé selon la revendication 1, **caractérisé en ce qu'**un potentiel de transmission de force des roues (5) du deuxième essieu (4) est déterminé.

3. Procédé selon l'une quelconque des revendications précédentes, **caractérisé en ce qu'**une vitesse de rotation différentielle de l'embrayage (13, 14) est déterminée à partir d'une vitesse de rotation côté dispositif de propulsion et d'une vitesse de rotation côté roue de l'embrayage (13, 14).

4. Procédé selon l'une quelconque des revendications précédentes, **caractérisé en ce qu'**une première valeur de torsion est déterminée pour une première transmission partielle reliant activement le dispositif de propulsion au premier essieu et une deuxième valeur de torsion est déterminée pour une deuxième transmission partielle reliant activement le dispositif de propulsion au deuxième essieu.

5. Procédé selon l'une quelconque des revendications précédentes, **caractérisé en ce que** la force de roue transmise par les roues (5) est déterminée à partir d'une accélération du véhicule à moteur.

6. Procédé selon l'une quelconque des revendications précédentes, **caractérisé en ce que** lors de la détermination de la force de roue, une masse minium et/ou une circonférence de roue maximum est utilisée.

7. Procédé selon l'une quelconque des revendications précédentes, **caractérisé en ce qu'**une distance parcourue par le véhicule à moteur est déterminée, en particulier par intégration de l'accélération.

8. Procédé selon l'une quelconque des revendications précédentes, **caractérisé en ce que** la valeur de sécurité est réduite d'une valeur déterminée, lorsque
- la distance parcourue correspond au moins à un empattement du véhicule à moteur, et/ou
- la vitesse de rotation différentielle de l'embrayage est inférieure à une valeur limite, et/ou
- l'accélération du véhicule à moteur correspond à une accélération prévue, et/ou
- une courbe temporelle de la première valeur de torsion et/ou une courbe temporelle de la deuxième valeur de torsion ne présentent aucun changement de charge.

9. Procédé selon l'une quelconque des revendications précédentes, **caractérisé en ce que** la valeur de sécurité est à nouveau augmentée lors de l'apparition d'une exigence de sécurité.

10. Transmission multiple (1) pour un véhicule à moteur pour la réalisation du procédé selon l'une quelconque des revendications précédentes, dans laquelle la transmission multiple (1) présente un dispositif de propulsion pour la mise à disposition d'un couple et un premier essieu (3) est en liaison active permanente avec le dispositif de propulsion et un deuxième essieu (4) est en liaison active au moins temporaire avec le dispositif de propulsion par le biais d'un embrayage (13, 14), dans laquelle lorsque le deuxième essieu (4) est couplé au dispositif de propulsion, un couple maximum du dispositif de propulsion est réduit d'une valeur de sécurité déterminée, dans laquelle le couple maximum désigne le couple pouvant être généré au maximum au moyen du dispositif de propulsion, et dans laquelle le couple mis à disposition par le dispositif de propulsion est limité en direction de valeurs plus grandes au couple maximum, **caractérisée en ce que** la transmission multiple (1) est réalisée pour régler, au début du déplacement, la valeur de sécurité sur une valeur initiale déterminée et ensuite la réduire sur une période de temps déterminée, dans laquelle la valeur initiale correspond à une différence entre le couple maximum et le couple maximum à transmettre au premier essieu, pour lequel aucun endommagement n'est prévu.
